# EUROPÄISCHE PATENTSCHRIFT

(11) **EP 2 593 250 B1**
(45) Veröffentlichungstag und Bekanntmachung des Hinweises auf die Patenterteilung: **01.10.2014**
(21) Anmeldenummer: 11723976.4
(22) Anmeldetag: 08.06.2011
(51) Int. Cl.: B21H 1/22, B21H 1/20, B21H 3/02

(54) **HERSTELLUNGSVERFAHREN FÜR EIN HALBZEUG**
PROCESS FOR PRODUCING A SEMIFINISHED PRODUCT
PROCÉDÉ DE FABRICATION D'UN DEMI-PRODUIT

(30) Priorität: 14.07.2010 DE 102010031316
(43) Veröffentlichungstag der Anmeldung: 22.05.2013
(73) Patentinhaber: HILTI Aktiengesellschaft, 9494 Schaan (LI)
(72) Erfinder: SELB, Michael, A-6800 Feldkirch (AT); WISSLING, Matthias, 59227 Ahlen (DE); KUEPER, Armin, CH-9488 Schellenberg (LI)
(74) Vertreter: Hilti Aktiengesellschaft Corporate Intellectual Property
(86) Internationale Anmeldenummer: PCT/EP2011/059452
(87) Internationale Veröffentlichungsnummer: WO 2012/007231

(56) Entgegenhaltungen:
- GB-A- 2 321 607
- US-A- 1 560 749
- US-A- 1 570 660
- US-A- 1 998 970

## Beschreibung

### GEBIET DER ERFINDUNG

Die vorliegende Erfindung betrifft ein Herstellungsverfahren für ein Halbzeug, insbesondere ein längliches mit wenigstens zwei unterschiedlich profilierten Abschnitten versehenes Halbzeug, z.B. einen Ankerbolzen.

Aus der US 1,998,970 A geht ein Verfahren und eine Vorrichtung zum Längswalzen eines Werkstücks hervor.

### OFFENBARUNG DER ERFINDUNG

Das erfindungsgemäße Herstellungsverfahren für ein längliches Halbzeug mit wenigstens zwei unterschiedlich profilierten Abschnitten vorgegebener Längen nutzt folgende Schritte. Ein kontinuierlich zugeführter Draht wird mittels einer drehenden Walze längsgewalzt. Beim Längswalzen wird die Walze um eine Achse gedreht, welche senkrecht zu einer Transportrichtung des Drahtes ist. Die Walze hat entlang ihres Umfangs ein erstes Segment mit einem Walzprofil, das in erste Abschnitte des Drahts ein Profil walzt, und ein zweites Segment ohne Walzprofil, das zu dem Draht berührungsfrei gedreht wird. Der Draht wird von der Walze abwechselnd stückweise strukturiert und stückweise nicht strukturiert. Während des Walzens des Profils wird eine Drehzahl der Walze derart angepasst, dass eine Geschwindigkeit des Walzprofils gleich der Zuführgeschwindigkeit des Drahts ist. Kleinere Abweichungen der Geschwindigkeiten können sich durch nicht erwünschten Schlupf des Drahtes ergeben. Während des berührungsfreien Drehens wird die Drehzahl der Walze derart angepasst, dass eine Länge des Drahts entsprechend einer vorgegebenen Länge des zweiten Abschnitts berührungsfrei an der Walze vorbeigeführt wird. Die Länge des zweiten Abschnitts kann unabhängig von einer verwendeten Walze und der Länge des ersten Abschnitts eingestellt werden. Die Länge des zweiten Abschnitts kann vorteilhaft ohne Umrüsten der Herstellungsstraße oder der Walze eingestellt werden. Ein Halbzeug mit dem ersten Abschnitt und dem zweiten Abschnitt wird von dem umgeformten Draht abgetrennt. Das Vereinzeln des Drahtes erfolgt nach dem Walzen.

Bei einer Ausführung wird der im ersten Abschnitt umgeformte kontinuierliche Draht mit einer weiteren Walze längsgewalzt. Der Draht wird vor dem Zerteilen in die Halbzeuge weiter strukturiert. Die weitere Walze hat entlang ihres Umfangs ein erstes Segment mit einem Walzprofil, das in den Draht ein weiteres Profil walzt, und ein zweites Segment ohne Walzprofil, das zu dem Draht berührungsfrei gedreht wird. Während des Walzens des weiteren Profils wird eine Drehzahl der Walze derart angepasst, dass eine Geschwindigkeit des Walzprofils gleich einer Geschwindigkeit des Drahts vor der weiteren Walze ist. Während des berührungsfreien Drehens wird die Drehzahl der Walze derart angepasst, dass das Walzen des weiteren Profils mit den ersten Abschnitten synchronisiert wird. Das Verfahren ermöglicht, den Draht kontinuierlich zu transportieren. Die beiden oder weitere Walzen können unabhängig und parallel den Draht bearbeiten. Die Segmente ohne Walzprofil werden genutzt, die Walzen auf den Draht und die bereits darin eingeprägten Strukturen zu synchronisieren. Hierdurch können unter Anderem auch die Geschwindigkeitsänderungen des Drahtes aufgrund der periodisch auftretenden Längungen wenigstens teilweise ausgeglichen werden. Das weitere Profil kann zum weiteren Strukturieren der ersten Abschnitte oder zum Einprägen des Profils in die zweiten Abschnitte dienen.

Eine Ausführungsform sieht vor, dass der Draht zwischen der Walze und der weiteren Walze entlang einer Bahn geführt wird. Eine Weglänge der Bahn wird durch einen Tänzer synchron zum Drehen der Walze derart geändert, dass der Draht der weiteren Walze mit einer konstanten Geschwindigkeit zugeführt wird. Die Längung des Drahtes durch die vordere Walze führt zu einer Erhöhung der Geschwindigkeit des Drahts. Die Geschwindigkeit ist jedoch nicht konstant, was durch eine gegenüber der vorderen Walze schneller drehende hintere, weitere Walze ausgeglichen werden könnte, sondern variiert. Die Geschwindigkeit hängt davon ab, ob die vordere Walze den Draht umformt oder ungeformt passieren lässt. Es wurde erkannt, dass man die Geschwindigkeitsänderung durch eine synchrone Änderung der Weglänge ausgleichen kann, dies ist insbesondere deshalb gangbar, da die Geschwindigkeitsänderungen periodisch auftreten. Ein "schneller" Teilbereich des Drahts, welcher mit einer höheren Geschwindigkeit die vordere Walze verlässt, wird verglichen zu einem "langsamen" Teilbereich, welcher die vordere Walze langsamer als der schnelle Teilbereich verlässt, über eine vergleichsweise längere Bahn geführt. Der Unterschied der Weglänge ist so austariert, dass die beiden Teilbereiche gleichlang bis zu der hinteren, weiteren Walze benötigen. Hierdurch erhält der Draht vor der hinteren Walze eine konstante, mittlere Geschwindigkeit. Die Änderung der Weglänge ist im Wesentlichen proportional zu der momentanen Geschwindigkeit des Drahts. Der Tänzer kann durch eine Regelung angesteuert werden, welche eine Geschwindigkeit des Drahts vor der hinteren, weiteren Walze als Stellgröße und diese auf eine mittlere Geschwindigkeit als Sollgröße regelt. Eine Ausgestaltung sieht die Schritte vor: Walzen wenigstens zweier längsverlaufender Nuten in wenigstens einen der Abschnitte und Walzen eines Gewindes in die seitlich durch die Nuten begrenzten Segmente, wobei die Gewindegänge weniger tief als die Nuten sind. Das hergestellte Gewinde ist umlaufend in mehrere Segmente durch die Nuten unterteilt. Jedes Segment des Gewindes wird durch eine zugeordnete Walze hergestellt. Die Abmessung des Walzprofils ist derart gewählt, dass dieses entlang des Umfangs des Rohlings von einer Nut zur anderen Nut reicht. Die seitlichen Ränder des Walzprofils greifen in die Nuten ein. Da aufgrund der Tiefe der Nuten das Walzprofil für die Gewinde kein Material verdrängen, werden Grate durch die Ränder der Walzen vermieden. Die Grate könnten den Gewindegang stören.

Eine Ausgestaltung sieht vor, dass in den ersten Abschnitt ein Hals und ein Spreizkörper gewalzt werden und in den zweiten Abschnitt ein Gewinde gewalzt wird.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Anker,
Fig. 2 eine Fertigungsstrasse für den Anker,
Fig. 3 ein abgewickeltes Walzprofil;
Fig. 4 bis 9 Stadien eines Ankerbolzen während des Herstellungsverfahrens.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

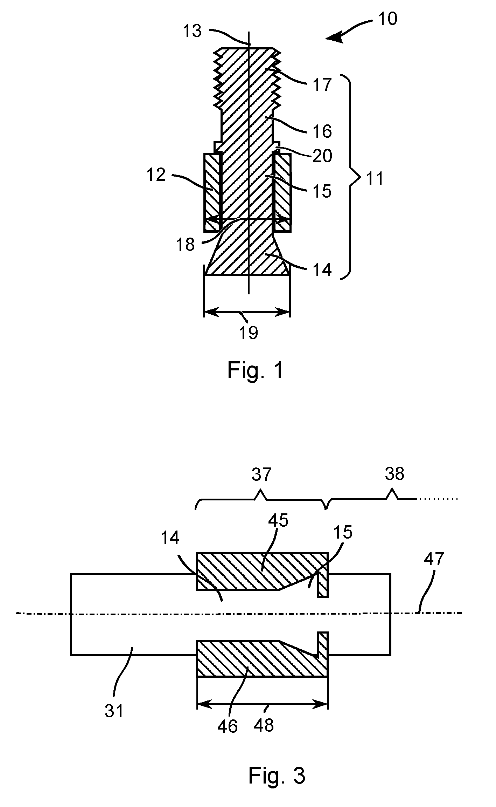

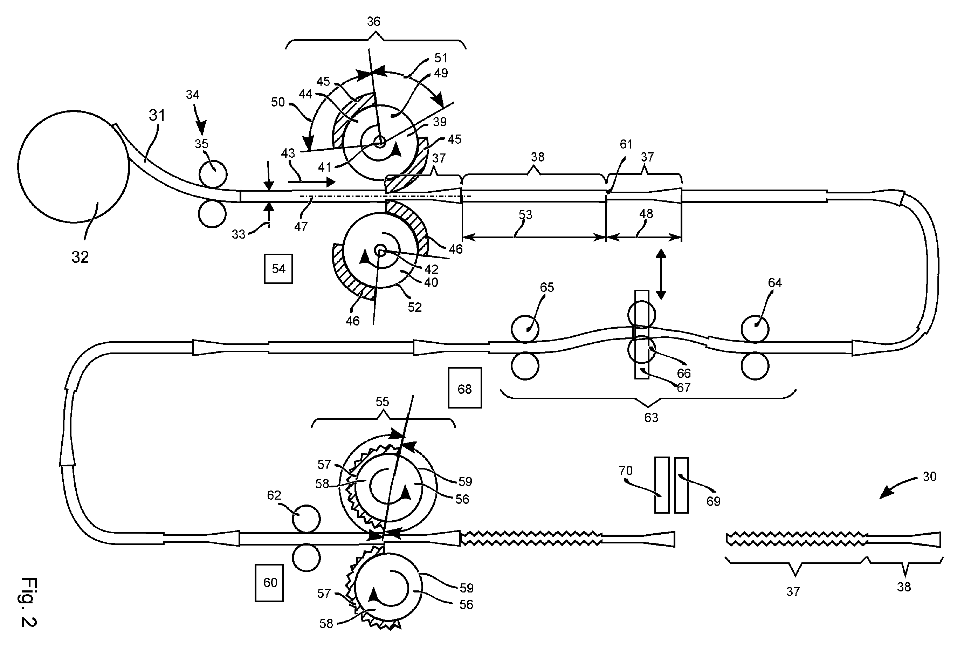

Fig. 1 zeigt einen Anker **10**, der beispielhaft als Spreizanker mit einem Ankerbolzen **11** und einer Spreizhülse **12** ausgebildet ist. Der Ankerbolzen **11** hat längs seiner Achse **13** einen Spreizkörper **14**, einen Hals **15**, einen Schaft **16** und ein Gewinde **17.** Die Spreizhülse **12** ist, längs dem Ankerbolzen **11** beweglich, auf dem Hals **15** vormontiert. Der Außendurchmesser **18** der Spreizhülse **12** ist etwa gleichgroß, wie der größte Durchmesser **19** des Spreizkörpers **14**. Der Anker **10** wird in ein Bohrloch mit einem Durchmesser entsprechend dem Außendurchmesser **18** der Spreizhülse **12** eingetrieben. Ein ringförmiger Bund **20** zwischen dem Hals **15** und dem Gewinde **17** kann ein Abstreifen der Spreizhülse **12** von dem Ankerbolzen **11** verhindern. Beim Spannen des Ankers **10** gegen den Untergrund, z.B. mittels einer Mutter **21**, wird der Spreizkörper **14** in die Spreizhülse **12** hineingezogen und klemmt die Spreizhülse **12** an einer Seitenwand des Bohrlochs fest. Fig. 2 zeigt eine schematische Darstellung einer Fertigungsstraße für ein Halbzeug **30**, insbesondere den Ankerbolzen **11** für den obig beschriebenen Anker **10**. Ein Draht **31** wird durch mehrere aufeinanderfolgende Walzen umgeformt, bevor der Draht **31** in mehrere Halbzeuge **30** vereinzelt wird.

Der Draht **31** kann beispielsweise aufgewickelt auf einer Versorgungstrommel **32** bereitgestellt werden. Die Länge des Drahts **31** liegt typischerweise im Bereich mehrerer Hundert Meter, und kann im Vergleich zu den herzustellenden Halbzeugen **30** mit einer Länge von einem bis mehreren Dezimetern als endlos lang bezeichnet werden. Der massive Querschnitt des Drahts **31** ist vorzugsweise kreisförmig, insbesondere wenn das Halbzeug **30** mit einem Gewinde **17** versehen wird. Ein Durchmesser **33** des Drahts **31** ist vorzugweise konstant und auf die radialen Abmessungen des herzustellenden Halbzeugs **30** abgestimmt, z.B. im Bereich von einem halben bis fünf Zentimetern. Beispielsweise kann der Durchmesser **33** des Drahts **31** gleich dem Flankendurchmesser des Gewindes **17**, d.h. etwa dem Mittelwert von Außen- und Kerndurchmesser des Gewindes **17** betragen. Der Durchmesser **33** ist dadurch typischerweise um viele Größenordnungen geringer als die Länge des Drahts **31,** z.B. kleiner als ein Tausendstel.

Eine Abwickeleinrichtung **34** nimmt den Draht **31** von der Versorgungstrommel **32** mit einer vorzugsweise konstanten Geschwindigkeit auf. Die Abwickeleinrichtung **34** hat z.B. wenigstens ein Paar Transportrollen **35,** welche gegenüberliegend an dem Draht **31** angepresst sind. Die Transportrollen **35** drehen sich mit einer konstanten Drehzahl (Geschwindigkeit).

Der endlose Draht **31** wird einem ersten Walzgestell **36** zugeführt, welches alternierend erste Abschnitte **37** des Drahts **31** verformt und zweite Abschnitte **38** des Drahts **31** unverändert passieren lässt. Eine Querschnittsfläche im Bereichen der ersten Abschnitte **37** wird gegenüber der ursprünglichen Querschnittsfläche, wie sie z.B. noch in den zweiten Abschnitten **38** vorhanden ist, verringert.

Das erste Walzgestell **36** kann eine obere Walze **39** und eine untere Walze **40** aufweisen, zwischen denen der Draht **31** hindurchgeführt wird. Die beiden Walzen **39, 40** werden um ihre obere Achse **41** bzw. untere Achse **42** mit einer einstellbaren Drehzahl gedreht. Die Achsen **41, 42** sind senkrecht zu einer Bewegungsrichtung **43** des Drahts **31.** Ein Drehsinn der oberen Walze **39** und der unteren Walze **40** ist mitlaufend mit der Bewegungsrichtung **43** des Drahts **31,** wodurch sich ein gegenläufiger Drehsinn der beiden Walzen **39, 40** ergibt. Der Drehsinn der Walzen **39, 40** bleibt vorzugsweise unverändert.

Auf dem Umfang der oberen Walze **39** ist in einem Segment **44** ein Walzprofil **45** angeordnet. Die untere Walze **40** kann mit einem zu dem Walzprofil **45** spiegelsymmetrischen Walzprofil **46** versehen sein, welche zusammen, abgerollt, einen Hohlraum vorgeben. In zumindest einer Richtung beschränken die Walzprofile **45, 46** den Hohlraum auf eine Abmessung, die geringer als der Durchmesser **33** des Drahts **31** ist. Beispielsweise ist ein Abstand der Walzprofile **45, 46** in einer Ebene senkrecht zu den Achsen **41, 42** und durch eine Achse **47** des Drahts **31** geringer als der Durchmesser **33** des Drahts **31.** Der Draht **31** wird im Kontakt mit den Walzprofilen **45, 46** gequetscht. Ein Teil des Materials des Drahts **31** verfließt in radialer Richtung, ein Teil entlang der Achse **47,** wodurch sich eine Reduzierung der Querschnittsfläche und eine Längung des Drahts **31** ergibt.

Das Walzprofil **45** kann beispielsweise ausgestaltet sein, den Spreizkörper **14** und den Hals **15** zu formen. Fig. 3 zeigt im Längsschnitt die Walzprofile **45, 46** in einer abgerollten Darstellung. Der umgeformte erste Abschnitt **37** des Drahts **31** erhält eine den Walzprofilen **45, 46** ähnliche Form, welche bedingt durch eine Längung des Drahts **31** gedehnt ist. Eine Länge **48** des ersten Abschnitts **37** ist fest durch eine Länge der Walzprofile **45, 46** vorgegeben.

Während des Walzens mit den Walzprofilen **45, 46** werden die Walzen **39, 40** mit einer ersten Drehzahl (Rotationsgeschwindigkeit) gedreht. Die erste Drehzahl ist derart abgestimmt, dass sich die Oberflächen der Walzprofile **45, 46** und der Draht **31** nahezu gleich schnell bewegen. Hierbei kommt es auf die Geschwindigkeit des Drahts **31** vor den Walzen **39, 40** an, welche als Zuführgeschwindigkeit bezeichnet wird. Der umgeformte Draht **31** wird durch das Längen auf eine höhere Geschwindigkeit beschleunigt, wenn er aus den Walzen **39, 40** austritt. Weil der zugeführte Draht **31** und die Oberfläche der Walzprofile **45, 46** sich etwa gleichschnell bewegen, wird ein Aufstauen des Drahts **31** vor den Walzen **39, 40** oder ein Ziehen des Drahts **31** durch die Walzen **39, 40** vermieden. Ein Umformen des Drahts **31** erfolgt durch das radiale Einwirken der Walzprofile **45, 46.** Eine geringfügige, vernachlässigbare Abweichung der Zuführgeschwindigkeit und der Geschwindigkeit der Walzen, kann notwendig sein, wenn der Draht **31** mit etwas Schlupf durch die Walzen **39, 40** geführt wird.

Das Walzprofil **45** nimmt nur einen Teil des Umfangs der oberen Walze **39** ein. Angrenzend an das Segment **44** mit dem Walzprofil **45,** schließt sich ein leeres Segment **49** ohne Walzprofil an. Das Segment **44** mit dem Walzprofil **45** kann einen ersten Winkel **50** und das leere Segment **49** einen zweiten Winkel **51** einnehmen. Der erste Winkel **50** ist im wesentlichen durch die gewünschte Länge **48** des ersten Abschnitts **37** und den Durchmesser der oberen Walze **39** vorgegeben. Der zweite Winkel **51** kann, da die Walzen **39** in der Regel nur mit bestimmten Durchmessern erhältlich sind, nicht frei gewählt werden, sondern entspricht dem verbleibenden Rest des Umfangs abzüglich des ersten Winkels **50.** Je nach Durchmesser der oberen Walze **39** können ein oder mehrere Paare des Segments **44** mit dem Walzprofil **45** und des leeren Segments **49** entlang des Umfangs angeordnet sein. Das gezeigte Beispiel hat zwei Segmente **44** mit Walzprofilen **45** und zwei leere Segmente **49.** Die untere Walze **40** hat ebenfalls ein leeres Segment **52.** Das leere Segment **49** bleibt beim Drehen der oberen Walze **40** beabstandet von dem Draht **31** und bewirkt keine Umformung. Der Draht **31** wird weiterhin kontinuierlich durch die Walzen **39, 40** transportiert. Hierdurch ergibt sich angrenzend an den ersten umgeformten Abschnitt **37** ein unbelassener zweiter Abschnitt **38,** der von der Walzen **39, 40** nicht verändert wird.

Die Walzen **39, 40** prägen nach dem zweiten Abschnitt **38** einen weiteren ersten Abschnitt **37** eines nächsten Ankerbolzens **11** oder anderen Halbzeugs **30** ein. Die Länge **53** des zweiten Abschnitts **38** ist in dem genannten Beispiel durch den Abstand der aufeinanderfolgend eingewalzten ersten Abschnitte **38** definiert. Die gewünschte Länge **53** des zweiten Abschnitts **38** wird durch Ändern der Drehzahl der Walzen **39, 40** auf eine andere als die erste Drehzahl erreicht. Mit beibehaltener erster Drehzahl wäre die Länge **53** des zweiten Abschnitts **38** im Verhältnis zu der Länge **48** des ersten Abschnitts **37** durch das Verhältnis des zweiten Winkels **51** zu dem ersten Winkel **50** vorgegeben. Durch ein Absenken der Drehzahl auf eine zweite Drehzahl, kann die Länge **53** des zweiten Abschnitts **38** auf eine größere Länge als durch das Winkelverhältnis vorgegeben erhöht werden. Die eingestellte Länge **53** ist invers proportional zu der Drehzahl der Walzen **39, 40.**

Falls beispielsweise ein größeres Längenverhältnis des zweiten Abschnitts **38** zu dem ersten Abschnitt **37** als das zugehörige Winkelverhältnis erreicht werden soll, wird die Drehzahl der Walzen **39, 40** gegenüber der ersten Drehzahl verringert, solange das nicht-umformende, leere Segment **49, 52** dem Draht gegenüberliegt. Ein Sensor **54** erfasst, wenn ein Anfang des leeren Segments **49** dem Draht **31** gegenüberliegt, d.h. der Draht **31** nicht mehr durch die Walzprofile **45, 46** berührt wird. Die Drehzahl der Walzen **39, 40** wird nun ohne Einfluss auf den Draht **31** auf eine zweite Drehzahl verringert. Beispielsweise bewegt die Abwickeleinrichtung **34** den Draht **31** weiterhin entlang der Walzen **39, 40** mit einer bekannten Geschwindigkeit. Die zweite Drehzahl wird derart gewählt, dass das Produkt der Geschwindigkeit des Drahtes **31** mit der Zeitspanne, für die der Draht an dem leeren Segment **49** vorbeigeführt wird, der gewünschten Länge **48** des zweiten Abschnitts **38** entspricht. Ein Ende des leeren Segments **49** wird mit dem Sensor **54** erfasst und die Walzen **39, 40** auf die erste Drehzahl beschleunigt, bevor die Walzprofile **45, 46** wieder den Draht **31** berühren.

Der teilweise umgeformte Draht **31** wird kontinuierlich einem hinteren Walzgestell **55** zugeführt. Das hintere Walzgestell **55** kann ebenfalls zwei Walzen **56** mit Walzprofilen **57** aufweisen. Neben Segmenten **58** mit Walzprofilen **57** sind freie oder leere Segmente **59** entlang des Umfangs der Walze **56** vorgesehen. Die Walzprofile **57** können sich von den Walzprofilen **45, 46** unterscheiden. In dem dargestellten Beispiel walzen die Walzprofile **45, 46** das Gewinde **17** in den zweiten Abschnitt **38** des Ankerbolzens **11.**

In einer Anfangsstellung kann das leere Segment **59** dem Draht **31** gegenüberliegend ausgerichtet sein, wodurch der Draht **31** ohne Berührung mit der Walze **56** passieren kann. Vor der Walze **56** kann eine Sensoreinrichtung **60,** z.B. eine Bilderfassungseinrichtung, die Form des Drahts **31** abtasten. Die Sensoreinrichtung **60** überwacht, ob ein Beginn des zweiten Abschnitts **38** die Sensoreinrichtung **60** passiert, und gibt bei positiven Ereignis ein Steuersignal aus. Der Beginn des zweiten Abschnitts **38** wird beispielsweise an dem Spreizkörper **14** erkannt, welche das Ende des ersten Abschnitts **37** markiert. Vorteilhafterweise kann die erste Walze **39** Markierungen, z.B. eine Kerbe, eine Stufe **61,** in den Draht **31** walzen, welcher von der Sensoreinrichtung **60** erfasst werden. Die Walze **56** wird ansprechend auf das Steuersignal auf die Drehzahl für das Walzen beschleunigt, bei welcher die Oberflächengeschwindigkeit der Walzprofile **57** gleich der Geschwindigkeit des Drahts **31** unmittelbar vor den Walzen **56** ist. Die Geschwindigkeit kann beispielsweise durch Mitläuferrollen **62** bestimmt werden, welche vor den Walzen **56** an dem Draht **31** anliegen. Der Beginn des Beschleunigens ist auf die anfängliche Stellung der Walze **56** und den Abstand der Sensoreinrichtung **60** von der Walze **56** abgestimmt, worauf ein Beginn das Walzprofils **57** den Beginn des zweiten Abschnitts **38** berührt. Die Walzen **56** werden mit bereits vorhanden Strukturen auf dem Draht **31** synchronisiert. Nach dem Walzen mit dem Walzprofil **57** wird die Drehzahl der Walze geändert, um eine Synchronisation des Walzprofils **57** mit dem nächsten zweiten Abschnitt **38** zu bewirken. Die Drehzahl der Walze **56** wird im Wesentlichen so angepasst, dass genau der erste Abschnitt **37** ungehindert passieren kann. Die Drehzahl wird in Abhängigkeit der Drehzahl für das Walzen, der Längenverhältnisse der beiden Abschnitte **37, 38** und der Winkelverhältnisse der beiden Segmente **59, 58** eingestellt.

Der Draht **31** wird vor dem hinteren Walzgestell **55** entlang einer Bahn **63** geführt. Der Draht **31** wird durch ein vorderes stationäres Rollenpaar **64** und ein hinteres stationäres Rollenpaar **65** gefädelt. Zwischen den beiden Rollenpaaren **64, 65** ist ein weiteres Rollenpaar angeordnet, das einen Tänzer **66** bildet. Der Tänzer **66** kann in einer Kulisse **67** senkrecht oder schräg zu einer Verbindungslinie von dem vorderen Rollenpaar **64** zu dem hinteren Rollenpaar **64** verschoben werden. Eine Weglänge der Bahn **63** von dem vorderen Rollenpaar **64** zu dem hinteren Rollenpaar **65** wird durch den Tänzer **66** verändert. Die Änderung der Weglänge ist in etwa proportional zur Verschiebung des Tänzers **66** in der Kulisse **67.** Ein Geschwindigkeitssensor **62** bestimmt die Geschwindigkeit des Drahts **31** an dem hinteren Rollenpaar **66.** Beispielsweise ist eine der Rollen freilaufend und mit einem Drehzahlmesser versehen. Eine Regelungseinrichtung **68** ermittelt eine Differenz der erfassten Geschwindigkeit des Drahts **31** zu einem Sollwert in Form einer mittleren Geschwindigkeit. Der Tänzer **66** wird ansprechend auf die Regelung bei einer zu hohen Geschwindigkeit weiter ausgelenkt, um die Weglänge zu erhöhen, bzw. bei einer zu niedrigen Geschwindigkeit eingezogen, um die Weglänge zu verringern. Die mittlere Geschwindigkeit als Sollwert ist vorgegeben und ist das zeitliche Mittel der Geschwindigkeit des Drahts **31** an dem vorderen Rollenpaar **66.** Variationen der Geschwindigkeit des Drahtes **31** am Ausgang der vorderen Walze **39** werden durch den Tänzer **66** ausgeglichen, wodurch eine konstante Geschwindigkeit am Eingang der hinteren Walze **56** erhalten wird.

Am Ende der Fertigungsstraße ist ein Abtrenneinrichtung **69** angeordnet. Die Abtrenneinrichtung **69** schneidet fortlaufend von dem umgeformten Draht **31** die Halbzeuge **30** ab. Jedes der Halbzeuge **30** hat einen ersten Abschnitt **37** und einen zweiten Abschnitt **38**. Zumindest einer der beiden Abschnitte **37, 38** ist von der Fertigungsstraße der Länge nach umgeformt worden. Die Abtrenneinrichtung **69** kann beispielsweise mittels einer Sensoreinrichtung **70** gesteuert werden, welche auf die Markierungen **61** anspricht.

Die exemplarisch dargestellte Fertigungsstraße hat nur zwei Gestelle **36, 55** zum Strukturieren der beiden Abschnitte **37, 38.** Die Anzahl der Gestelle und Walzen richtet sich nach der Komplexität der herzustellenden Strukturen und dem Grad der notwendigen Umformung des Drahtes **31.** So können zum Formen des ersten Abschnitts **37** mehrere Teilumformungsschritte und Gestelle notwendig sein. Die Herstellungsstraße kann auch drei oder mehrere Abschnitte mit unterschiedlichen Gestellen bearbeiten. Ein Gestell kann mit einem nichtprofilierten Segment erste und zweite Abschnitt des Drahtes passieren lassen und nur einen dritten Abschnitt bearbeiten. Der erste und zweite Abschnitt werden von zwei anderen Gestellen unabhängig umgeformt.

Ein einzelnes Gestell kann ein, zwei oder mehrere Walzen aufweisen, welche unterschiedliche Segmente des Drahtes bearbeiten.

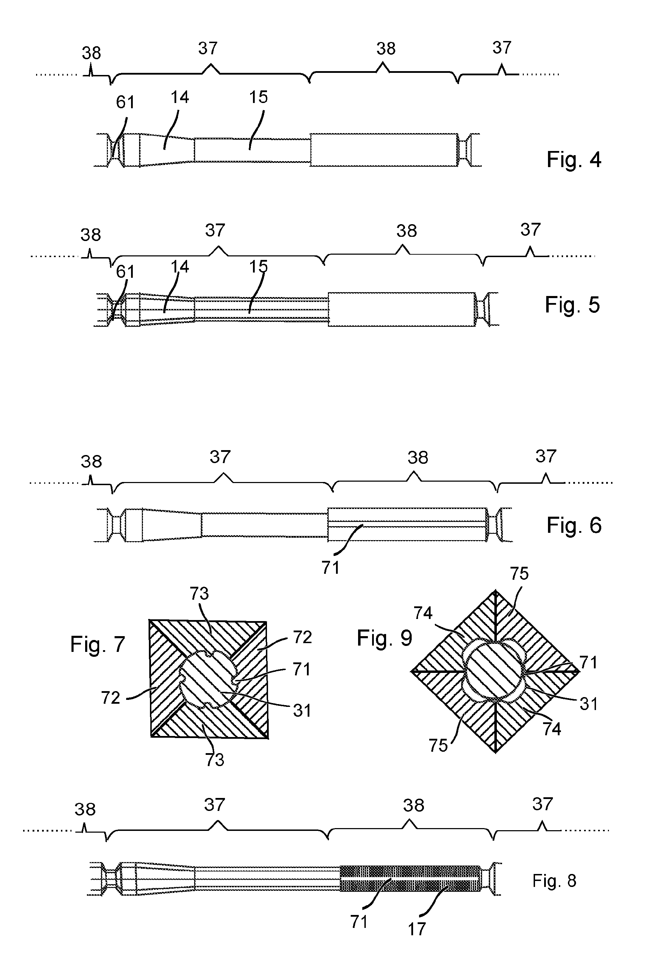

Fig. 4 bis 9 Figuren zeigen exemplarisch Längsschnitte durch Zwischenprodukte eines Ankerbolzens **11,** der mit einer obig beschriebenen Walzstraße hergestellt wird.

Mit ersten Walzgestellen formen mit Walzprofilen auf den Walzen den Hals **15,** den Spreizkörper **14** und die Kerbe **61** zwischen den ersten Abschnitten **37** und den zweiten Abschnitten **38.** Die anderen Abschnitte des Drahts **31** passieren mittels der leeren Segmente der Walzen unverändert das erste Walzgestell.

Optional ist ein weiteres Walzgestell vorgesehen, das den Querschnitt des Spreizkörpers **14** auf einen oktogonalen Querschnitt, d.h. zu einem Pyramidenstumpf mit oktagonaler Grundfläche trimmt (Fig. 5). Das weitere Walzgestell hat vorzugsweise zwei Paar Walzen, die nur den Pyramidenstumpf walzen. Die anderen Abschnitte des Ankerbolzens **11** passieren die Walzen unverändert.

Das Gewinde **17** kann in die zweiten Abschnitte **38** gewalzt werden. In den zweiten Abschnitt **38** werden zunächst vier längsverlaufende Nuten **71** eingewalzt (Fig. 6). Fig. 7 zeigt vergrößert einen Querschnitt durch den zweiten Abschnitt 38. Die Nuten **71** sind vorzugsweise zueinander um gleiche Winkel, z.B. 90 Grad, versetzt angeordnet. Ein erstes Paar Walzen **72** kann zwei der gegenüberliegenden Nuten **71** und ein zu dem ersten Paar um 90 Grad gedreht angeordnetes zweites Paar Walzen **73** kann die zwei anderen Nuten **71** walzen. Die beiden Paare mit Walzen **72, 73** können längs der Bewegungsrichtung des Drahtes **31** versetzt angeordnet sein. Ein drittes Paar Walzen **74** und ein viertes Paar Walzen **75** haben Walzprofile zum Erzeugen der Gewindegänge des Gewindes **17** (Fig. 8, 9). Das dritte Paar Walzen **74** ist um 45 Grad zu dem ersten und zweiten Paar Walzen **72, 73** gedreht angeordnet. Die Gewindegänge werden in die Segmente **76** zwischen den Nuten **71** gewalzt. Die in Umfangsrichtung verlaufenden, seitlichen Ränder **77** der Walzprofile greifen in die Nuten **71** ein. Die Nuten **71** sind so tief, dass die seitlichen Ränder **77** den Draht **31** nicht umformen. Die Gewindegänge verlaufen durchgehend zwischen benachbarten Nuten **71.**

Abschließend trennt die Abtrenneinrichtung **69** die Ankerbolzen **11** von dem Draht **31** ab.

## Patentansprüche

1. Herstellungsverfahren für ein längliches Halbzeug (30) mit wenigstens zwei unterschiedlich profilierten Abschnitten (37, 38) vorgegebener Längen (48, 53), mit den Schritten:
Längswalzen eines kontinuierlich zugeführten Drahts (31) mittels einer drehenden Walze (39), die entlang ihres Umfangs ein erstes Segment (44) mit einem Walzprofil (45), das in erste Abschnitte (37) des Drahts (31) ein Profil walzt, und ein zweites Segment (49) ohne Walzprofil, das zu dem Draht (31) berührungsfrei gedreht wird, hat, wobei während des Walzens des Profils eine Drehzahl der Walze (39) derart angepasst wird, dass eine Geschwindigkeit des Walzprofils (45) gleich der Zuführgeschwindigkeit des Drahts (31) zu der Walze (39) ist, und während des berührungsfreien Drehens die Drehzahl der Walze (39) derart angepasst wird, dass eine Länge des Drahts (31) entsprechend einer vorgegebenen Länge (53) des zweiten Abschnitts (38) berührungsfrei an der Walze (39) vorbeigeführt wird,
Abtrennen eines Halbzeugs (30) mit dem ersten Abschnitt (37) und dem zweiten Abschnitt (38) von dem umgeformten Draht (31).

2. Herstellungsverfahren nach Anspruch 1, **gekennzeichnet durch** ein Walzen des im ersten Abschnitt (37) umgeformten kontinuierlichen Drahts (31) mit einer weiteren Walze(56), die entlang ihres Umfangs ein erstes Segment (58) mit einem Walzprofil (57), das in den Draht (31) ein weiteres Profil walzt, und ein zweites Segment (59) ohne Walzprofil, das zu dem Draht (31) berührungsfrei gedreht wird, hat, wobei während des Walzens des weiteren Profils eine Drehzahl der Walze (56) derart angepasst wird, dass eine Geschwindigkeit des Walzprofils (57) gleich einer Zuführgeschwindigkeit des Drahts (31) zu der weiteren Walze (56) wird, und während des berührungsfreien Drehens die Drehzahl der Walze (56) derart angepasst wird, dass das Walzen des weiteren Profils mit den ersten Abschnitten (37) synchronisiert ist.

3. Herstellungsverfahren nach Anspruch 2, **dadurch gekennzeichnet, dass** der Draht (31) zwischen der Walze (39) und der weiteren Walze (56) entlang einer Bahn (63) geführt wird, deren Weglänge durch einen Tänzer (66) synchron zum Drehen der Walze (39) derart geändert wird, dass der Draht (31) der weiteren Walze (56) mit einer konstanten Geschwindigkeit zugeführt wird.

4. Herstellungsverfahren nach Anspruch 2 bis 3, **dadurch gekennzeichnet, dass** das weitere Profil alternativ in die ersten Abschnitte (37) oder die zweiten Abschnitte (38) gewalzt wird.

5. Herstellungsverfahren nach einem der vorhergehenden Ansprüche, **dadurch gekennzeichnet, dass** in den ersten Abschnitt (37) ein Hals (15) und ein Spreizkörper (14) gewalzt werden und in den zweiten Abschnitt (38) ein Gewinde (17) gewalzt wird.

6. Herstellungsverfahren nach einem der vorhergehenden Ansprüche, **gekennzeichnet durch** die Schritte
Walzen von wenigstens zweier längsverlaufender Nuten (71) in wenigstens einen der Abschnitte (37, 38),
Walzen eines Gewindes (17) in die seitlich **durch** die Nuten (71) begrenzten Segmente, wobei die Gewindegänge weniger tief als die Nuten (71) sind.

## Claims

1. Method for producing an elongated semi-finished product (30) having at least two differently profiled sections (37, 38) of predefined lengths (48, 53), comprising the steps:
longitudinal rolling of a continuously fed wire (31) by means of a rotating roller (39) having along its circumference a first segment (44) with a rolling profile (45) which rolls a profile in first sections (37) of the wire (31), and a second segment (49) without a rolling profile which is rotated with respect to the wire (31) without making contact therewith, a rotational speed of the roller (39) being adapted during the rolling of the profile in such a way that a speed of the rolling profile (45) is equal to the feed velocity of the wire (31) to the roller (39), and the rotational speed of the roller (39) being adapted during the contact-free rotation in such a way that a length of the wire (31) corresponding to a predefined length (53) of the second section (38) is guided past the roller (39) without making contact therewith;
separation of a semi-finished product (30) having the first section (37) and the second section (38) from the reshaped wire (31).

2. Production method according to Claim 1, **characterised by** rolling of the continuous wire (31) reshaped in the first section (37) with a further roller (56) having along its circumference a first segment (58) with a rolling profile (57) which rolls a further profile in the wire (31), and a second segment (59) without a rolling profile which is rotated with respect to the wire (31) without making contact therewith, a rotational speed of the roller (56) being adapted during the rolling of the further profile in such a way that a speed of the rolling profile (57) becomes equal to a feed velocity of the wire (31) to the further roller (56), and the rotational speed of the roller (56) being adapted during the contact-free rotation in such a way that the rolling of the further profile is synchronised with the first sections (37).

3. Production method according to Claim 2, **characterised in that** the wire (31) is guided between the roller (39) and the further roller (56) along a path (63) the travel length of which is changed by a dancer roller (66) synchronously with the rotation of the roller (39) in such a way that the wire (31) is fed to the further roller (56) at a constant speed.

4. Production method according to Claims 2 and 3, **characterised in that** the further profile is rolled alternately in the first sections (37) or in the second sections (38).

5. Production method according to any one of the preceding claims, **characterised in that** a neck (15) and an expanded portion (14) are rolled in the first section (37) and a thread (17) is rolled in the second section (38).

6. Production method according to any one of the preceding claims, **characterised by** the steps:
rolling of at least two longitudinally disposed grooves (71) in at least one of the sections (37, 38),
rolling of a thread (17) in the segments bordered laterally by the grooves (71), the thread profiles being less deep than the grooves (71).

## Revendications

1. Procédé de fabrication d'un demi-produit (30) de forme oblongue pourvu d'au moins deux sections (37, 38) profilées différemment de longueurs prédéfinies (48, 53), comprenant les étapes suivantes consistant à :
laminer dans le sens longitudinal un fil (31) amené en continu au moyen d'un cylindre (39) rotatif, lequel comprend, le long de sa périphérie, un premier segment (44) pourvu d'un profil de laminage (45) laminant un profil dans des premières sections (37) du fil (31), et un deuxième segment (49) sans profil de laminage, qui est mis en rotation sans contact par rapport au fil (31), sachant que lors du laminage du profil, une vitesse de rotation du cylindre (39) est adaptée de telle manière qu'une vitesse du profil de laminage (45) est identique à la vitesse d'amenée du fil (31) au cylindre (39), et que, au cours de la rotation sans contact, la vitesse de rotation du cylindre (39) est adaptée de telle manière qu'une longueur du fil (31) passe le long du cylindre (39) sans contact selon une longueur (53) prédéfinie de la deuxième section (38) ;
séparer un demi-produit (30) pourvu de la première section (37) et de la deuxième section (38) du fil (31) mis en forme.

2. Procédé de fabrication selon la revendication 1, **caractérisé par** un laminage du fil (31) continu mis en forme dans la première section (37) à l'aide d'un autre cylindre (56), qui comporte le long de sa périphérie un premier segment (58) pourvu d'un profil de laminage (57), qui lamine un autre profil dans le fil (31), et un deuxième segment (59) sans profil de laminage, qui tourne sans contact par rapport au fil (31), sachant qu'au cours du laminage de l'autre profil, une vitesse de rotation du cylindre (56) est adaptée de telle manière qu'une vitesse du profil de laminage (57) est identique à une vitesse d'amenée du fil (31) à l'autre cylindre (56), et qu'au cours de la rotation sans contact, la vitesse de rotation du cylindre (56) est adaptée de telle manière que le laminage de l'autre profil est synchronisé avec les premières sections (37).

3. Procédé de fabrication selon la revendication 2, **caractérisé en ce que** le fil (31) est guidé le long d'un parcours (63) entre le cylindre (39) et l'autre cylindre (56), dont la longueur est modifiée par un rouleau de tension (66) de manière synchrone à la rotation du cylindre (39) de telle manière que le fil (31) de l'autre cylindre (56) est amené à une vitesse constante.

4. Procédé de fabrication selon la revendication 2 à 3, **caractérisé en ce que** l'autre profil est laminé de manière alternée dans les premières sections (37) ou dans les deuxièmes sections (38).

5. Procédé de fabrication selon l'une quelconque des revendications précédentes,
**caractérisé en ce qu'**un col (15) et un corps d'écartement (14) sont laminés dans la première section (37), et **en ce qu'**un filetage (17) est laminé dans la deuxième section (38).

6. Procédé de fabrication selon l'une quelconque des revendications précédentes, **caractérisé par** les étapes suivantes consistant à :
laminer au moins deux rainures (71) s'étendant dans le sens de la longueur dans au moins une des sections (37, 38) ;
laminer un filetage (17) dans les segments délimités latéralement par les rainures (71), sachant que les pas de filetage sont moins profonds que les rainures (71).
